(19) Europäisches Patentamt
European Patent Office
Office européen des brevets

(11) **EP 1 108 535 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
*B41F 13/00* (2006.01)      *F16F 15/02* (2006.01)
*F16F 7/116* (2006.01)

(21) Anmeldenummer: **00123429.3**

(22) Anmeldetag: **03.11.2000**

(54) **Vorrichtung zur Kompensation seitlicher Rahmenvibrationen in Druckwerken von Rotationsdruckmaschinen**

Device for compensating vibrations of side frames in printing units of rotary presses

Dispositif pour la compensation de vibrations de bâtis lateraux dans des groupes imprimants de presses rotatives

(84) Benannte Vertragsstaaten:
**AT BE CH CY DE DK ES FI FR GB GR IE IT LI LU MC NL PT SE TR**

(30) Priorität: **15.12.1999 US 461863**

(43) Veröffentlichungstag der Anmeldung:
**20.06.2001 Patentblatt 2001/25**

(73) Patentinhaber: **Goss International Americas, Inc. Dover, NH 03820 (US)**

(72) Erfinder:
• **Douillard, Gerald Roger
  Epping NH 03042 (US)**
• **Lapine, Eric Michael
  Northwood, NH 03261 (US)**
• **Belanger, James Richard
  Portsmouth, NH 03801 (US)**

(74) Vertreter: **Domenego, Bertrand et al
  Cabinet Lavoix
  2, place d'Estienne d'Orves
  75441 Paris Cedex 09 (FR)**

(56) Entgegenhaltungen:
EP-A- 0 598 677          DE-A- 3 011 384
DE-A- 4 412 945          DE-C- 763 124
US-A- 3 633 495

• **PATENT ABSTRACTS OF JAPAN vol. 1997, no. 02, 28. Februar 1997 (1997-02-28) & JP 08 276562 A (MITSUBISHI HEAVY IND LTD), 22. Oktober 1996 (1996-10-22)**

**Beschreibung**

Die vorliegende Erfindung betrifft eine Vorrichtung zur Kompensation seitlicher Rahmenvibrationen in Druckwerken von Rotationsdruckmaschinen gemäß den Oberbegriffen der Ansprüche 1 und 8.

Seitliche Vibrationen können beträchtliche Schwingungen in den Drucktürmen von Zeitungsdruckmaschinen verursachen. Wenn diese Schwingungen eine bestimmte Größenordnung erreichen, können sie starke Belastungen an den Verbindungspunkten zwischen den Druckwerken hervorrufen. Ferner können sich starke Schwingungen unangenehm für den Maschinenbediener auswirken und seitliches Dublieren verursachen.

Aus der JP 8-276562 ist eine gattungsgemäße Vorrichtung zur Dämpfung von in einem Druckwerk einer Rotationsdruckmaschine erzeugten Schwingungen bekannt, die durch eine changierende Bewegungen durchführende Druckwerkswalze erzeugt werden und bei welcher ein auf dem Druckwerk angeordnetes Masseelement in Form eines Wagens über eine Feder und eine zur Feder parallel geschaltete Dämpfungseinrichtung mit einem auf der Oberseite des Gehäuses angeordneten, sich senkrecht nach oben erstreckenden Gehäuseteil gekoppelt ist. Die Schrift gibt keinen Hinweis darauf, das Masselelement entlang einer Stange zu führen bzw. an einer mit dem Druckwerk fliegend verbundenen Stange verschiebbar anzuordnen, wodurch sich die beschriebene Vorrichtung nur mit größerem Aufwand durchstimmen und hierdurch an die zu dämpfende Eigenfrequenz des Druckwerks anpassen lässt.

Aus der DE 30 11 384 und der US-A-3,633,495 sind ebenfalls Vibrationsdämpfungsmaßnahmen bekannt.

Demgemäß ist es eine Aufgabe der vorliegenden Erfindung, eine Vorrichtung zur Kompensation seitlicher Rahmenvibrationen in Druckwerken zu schaffen, durch welche die zuvor erwähnten Nachteile bekannter Vorrichtungen vom Bedienpersonal auf einfache Weise beseitigt, die Vibrationen gedämpft und die starken Belastungen, welche die Schwingungen weiter verstärken, aufgehoben werden, so dass die Maschine bedienerfreundlicher wird und die Druckqualität verbessert wird.

Diese Aufgabe wird erfindungsgemäß durch die Merkmale der Ansprüche 1 und 8 gelöst.

Weitere Merkmale der Erfindung ergeben sich aus den Unteransprüchen.

Eine weitere Ausführungsform der vorliegenden Erfindung sieht vor, dass an dem Stab Kragen angeordnet sein können, die zwischen einem jeweiligen Ende der Federn und dem jeweiligen Seitenrahmen bewegbar sind. Der Stab kann zumindest in Abschnitten ein Außengewinde aufweisen, und die Kragen können ein Innengewinde aufweisen. Auf diese Weise ist die Vorspannungskraft der Federn manuell verstellbar. Zumindest ein zusätzliches Masseelement kann ferner abnehmbar an dem auf dem Stab verschiebbaren Masseelement befestigt sein. Dies ermöglicht ebenfalls eine Verstellbarkeit der Vorrichtung. Der Einsatz der Kragen bietet ferner den Vorteil der einfachen Montage der Vorrichtung, da einige Elemente lose befestigt und später festgezogen werden können, bis die gewünschte Vorspannungskraft erreicht ist. Durch die Kragen sind die Federn ferner zur Veränderung der Federkonstante des Systems leicht austauschbar.

Gemäß einer weiteren Ausführungsform der vorliegenden Erfindung kann das Element als ein Verbindungsstück ausgebildet sein, das zwischen den Seitenrahmen angeordnet ist, wobei das Masseelement bezüglich des Verbindungsstücks verschiebbar ist. Mit dem Verbindungsstück ist ein Stab verbunden, entlang dem das Masseelement verschiebbar ist. Der Stab weist vorzugsweise ein Außengewinde und das Masseelement vorzugsweise ein Innengewinde auf. In dieser Ausführungsform ist die Vorrichtung ebenfalls verstellbar.

Weiterhin kann vorgesehen sein, dass ein Stab als das Element bereitgestellt wird und das Masseelement verschiebbar auf dem Stab angeordnet wird. Das Masseelement wird vorzugsweise zwischen zwei Federn vorgespannt, die jeweils an einem Ende am Masseelement und am anderen Ende am jeweiligen Seitenrahmen befestigt sind. Zwischen den Seitenrahmen wird um den Stab herum ein Verbindungsstück angeordnet.

Gemäß einer weiteren Ausführungsform können bewegbare Kragen an dem Stab positioniert werden. Jeder der Kragen ist zum Verstellen der Vorspannungskraft der Federn vorzugsweise in der Weise angeordnet, dass er zwischen dem rahmenseitigen Ende einer jeweiligen Feder und dem jeweiligen Rahmen positioniert ist. Zumindest ein zusätzliches Masseelement kann abnehmbar am auf dem Stab verschiebbaren Masseelement befestigt werden.

Weiterhin kann vorgesehen sein, dass als das Element ein Verbindungsstück bereitgestellt wird, bezüglich dessen das Masseelement bewegt wird. Mit dem Verbindungsstück kann ein Stab verbunden werden, entlang dem das Masseelement bewegt wird.

Die Merkmale der vorliegenden Erfindung werden in der folgenden Beschreibung bevorzugter Ausführungsbeispiele im Zusammenhang mit den beigefügten, nachstehend aufgeführten Zeichnungen näher erläutert.

Es zeigen:

Fig. 1      eine schematische, seitliche Teilansicht eines Druckwerks-Seitenrahmens einer Druckmaschine, die eine erste Ausführungsform einer erfindungsgemäßen Vorrichtung zur Kompensation seitlicher Rahmenvibrationen umfasst,

Fig. 2      eine ähnlich wie in Fig. 1 dargestellte zweite Ausführungsform der erfindungsgemäßen Vorrichtung; und

Fig. 3      eine ähnlich wie in Fig. 1 und 2 dargestellte dritte Ausführungsform der erfindungsgemäßen Vorrichtung.

In der folgenden Beschreibung bevorzugter Ausführungsbeispiele werden Elemente mit gleichen oder ähnlichen Funktionen mit den gleichen Bezugszeichen bezeichnet.

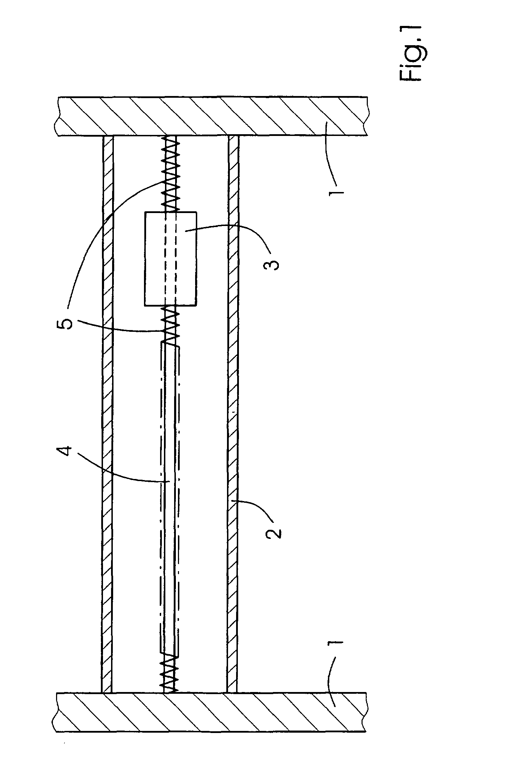

Fig. 1 zeigt einen Abschnitt eines Druckwerks einer Druckmaschine mit zwei Seitenrahmen 1, die eine erfindungsgemäße Ausgleichsvorrichtung umfassen. Zwischen den Seitenrahmen 1 verläuft ein hohles Verbindungsstück 2 in dieselbe Richtung, in die auch die Schwingbewegung der Reiberwalzen verläuft. Überall dort, wo Vibrationen ausgeglichen werden müssen, beispielsweise in der Nähe von Farb- und/oder Feuchtwerken, kann eine Vielzahl von derartigen Verbindungsstücken 2 vorgesehen sein.

Das in Fig. 1 dargestellte Verbindungsstück 2 ist in einer vertikalen Schnittansicht gezeigt, in der das Innere zu sehen ist. Zwischen den Seitenrahmen 1 verläuft ein vorzugsweise glatter Stab 4 innerhalb des Verbindungsstücks 2. Ein Vibrationsisolator oder Masseelement 3 ist auf den Stab 4 innerhalb des Verbindungsstücks 2 zwischen den Seitenrahmen 1 aufgeschoben. Am Stab 4 sind ferner beiderseits des Masseelements 3 zwei Federn 5 von vorzugsweise gleicher Eigensteife angeordnet, durch die das Masseelement 3 mit den Seitenrahmen 1 verbunden ist. Das Masseelement 3 ist auf dem Stab 4 frei verschiebbar, so dass es sich in der Position platzieren kann, in der es die Schwingungen absorbiert. Die Federkonstante der Federn beträgt jeweils $k/_2$, d. h. die Hälfte der Gesamtfederkonstanten K beider Federn. Die Federn 5 können gleich oder verschieden lang sein, besitzen jedoch dieselbe Federkonstante.

Das Druckwerk ist ein erstes Schwingungssystem, das mit einer äußeren anregenden Frequenz angeregt wird. Das zwischen den Federn 5 am Stab 4 angeordnete Masseelement 3 bildet ein zweites Schwingungssystem, das mit dem ersten Schwingungssystem über die Federn 5 gekoppelt ist. Die Eigenfrequenz des zweiten Schwingungssystems ist in Abhängigkeit von der äußeren anregenden Frequenz gewählt. Bekanntermaßen kann die Amplitude einer Auslenkung des ersten Schwingungssystems durch das zweite Schwingungssystem kompensiert werden, wenn für dieses die geeignete Masse und Federkonstante gewählt wird.

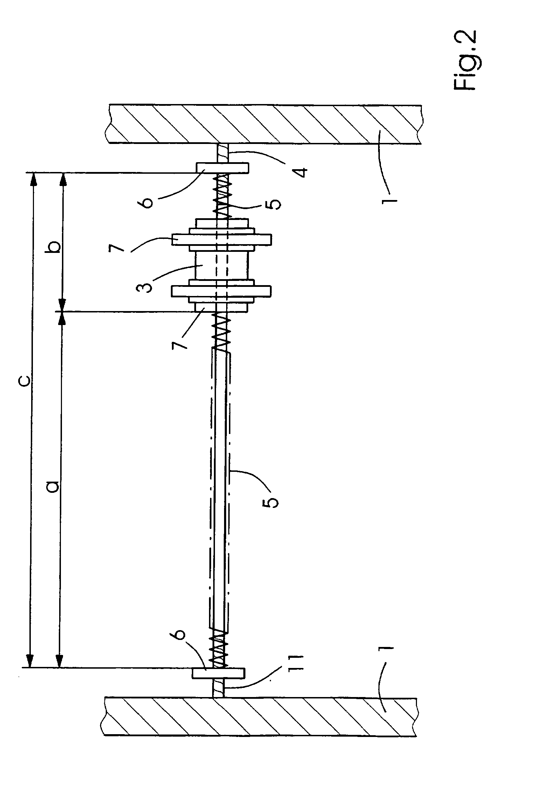

In Fig. 2 ist eine zweite Ausführungsform der vorliegenden Erfindung gezeigt, bei der die Seitenrahmen 1, der Stab 4, das Masseelement 3 und die Federn 5 auf ähnliche Weise wie bei der in Fig. 1 gezeigten Ausführungsform ausgebildet sind. Das Masseelement 3 ist ebenfalls frei auf der Strebe oder dem Stab 4 verschiebbar, und die Federn haben im Wesentlichen dieselbe Federkonstante und vorzugsweise auch dieselbe Länge. In dieser Ausführungsform weist der Stab 4 jedoch zumindest in seinen Endabschnitten ein Außengewinde 11 auf. Auf beide Enden des Stabs 4 ist jeweils ein Kranz oder Kragen 6 mit Innengewinde aufgeschraubt. An dem Masseelement 3 sind vorzugsweise zusätzliche, abnehmbare Masseelemente 7 angeordnet. Die Gewindekränze oder -kragen 6 und die zusätzlichen Masseelemente 7 dienen dazu, die Frequenz der Kompensationsvorrichtung anzupassen. Dies wird durch eine geeignete Positionierung der Gewindekragen 6 erreicht, durch die die Vorspannung der Federn 5 veränderbar ist, sowie durch Hinzufügen oder Abnehmen der zusätzlichen, abnehmbaren Masseelemente 7.

Die Kragen 6 sind in einem Abstand c zueinander angeordnet, der durch das Masseelement 3 in Teilabschnitte a und b unterteilt wird. Die Federkonstante $K_1$ des Systems, eine Konstante, setzt sich zusammen aus der Federkonstante $K_1/_2$ einer der Federn 5 und der Federkonstante $K_1/2$ der anderen Feder 5. Da die Masse m des Masseelements 3 veränderbar ist, ist bei konstantem $K_1$ aufgrund der Beziehung $w = \sqrt{\dfrac{K_1}{m}}$ auch die Frequenz w des Systems veränderbar.

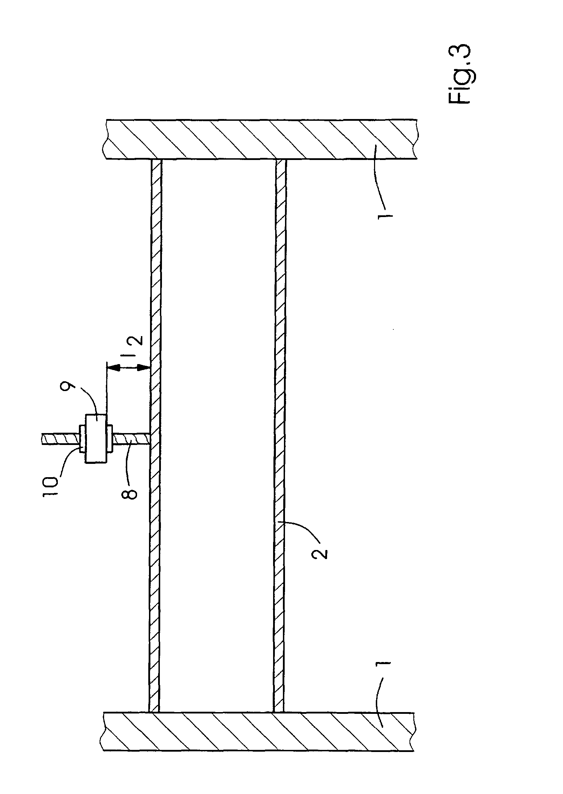

In Fig. 3 ist eine dritte Ausführungsform der vorliegenden Erfindung gezeigt. Zwischen den Seitenrahmen ist ein hohles Verbindungsstück 2 angeordnet, das jedoch nicht zwangsläufig hohl ausgebildet sein muss. In dieser Ausführungsform ist am Verbindungsstück 2 ein Gewindestab 8 angeordnet. Ein Masseelement 9 mit einer Gewindebohrung ist an dem Stab 8 fliegend gelagert und wird nach dem Positionieren von einer Feststellvorrichtung 10, z. B. einer Mutter oder einer Klemmvorrichtung, in seiner Position gehalten. Der elastisch ausgebildete Stab 8 weist dabei in eine Richtung, die im Wesentlichen senkrecht zu der Richtung der Schwingungsbewegung des Druckwerks. Hierdurch führt das Masseelement 9 am Stab 8 eine bogenförmige Bewegung aus, die sich insbesondere bei hohen Drucktürmen in vorteilhafter Weise mit der ebenfalls bogenförmigen Schwingungsbewegung der Drucktürme überlagert und zu einer effizienten Abschwächung der Gesamtschwingung führt. Die Eigenfrequenz der Vorrichtung kann durch Veränderung des Abstands zwischen dem Verbindungsstück 2 und dem Masseelement 9 verändert werden. Das Masseelement 9 ist in einem Abstand $l_2$ zum Verbindungsstück 2 angeordnet. Die Masse $m_2$ des Masseelements 9 ist veränderbar und eine Veränderung der Entfernung $l_2$ bewirkt eine Veränderung der Federkonstante $K_2$, wobei gilt:

$$K_2 = f\left(\frac{1}{(l_2)^3}\right)$$

Demgemäß ist $K_2$ veränderbar.

**Liste der Bezugszeichen**

| 1 | Seitenrahmen |
|---|---|
| 2 | hohles Verbindungsstück |
| 3 | Masseelement |
| 4 | Stab |
| 5 | Feder |
| 6 | Gewindekranz, Kragen |
| 7 | zusätzliches Masseelement |
| 8 | Gewindestab |
| 9 | Masseelement |
| 10 | Feststellvorrichtung |
| 11 | Außengewinde |
| a | Teilabschnitt |
| b | Teilabschnitt |
| c | Abstand der Gewindekragen |
| $l_2$ | Abstand |
| m, $m_2$ | Masse |
| K, $K_1$, $K_2$ | Federkonstante |
| w | Frequenz |

**Patentansprüche**

1. Vorrichtung zur Kompensation seitlicher Rahmenschwingungen in Druckwerken von Rotationsdruckmaschinen, mit einem durch federelastische Mittel mit dem Gehäuse des Druckwerks verbundenen Masseelement (3), wobei das Masseelement (3) auf einem zwischen den Seitenrahmen (1) angeordneten Stab (4) verschiebbar angeordnet ist **dadurch gekennzeichnet, dass** die federelastischen Mittel durch zwei auf das Masseelement (3) wirkende Federn (5) gebildet werden, und dass die Vorspannung der Federn (5) einstellbar ist.

2. Vorrichtung nach Anspruch 1 **dadurch gekennzeichnet,** **dass** die Federn (5) am Stab (4) angeordnet sind.

3. Vorrichtung nach einem der vorhergehenden Ansprüche, **dadurch gekennzeichnet,** **dass** die Federn (5) im Wesentlichen dieselbe Federkonstante ($K_1$, $K_2$) aufweisen.

4. Vorrichtung nach einem der vorhergehenden Ansprüche, **gekennzeichnet durch** ein hohles Verbindungsstück (2), das zwischen den Seitenrahmen (1) angeordnet ist und den Stab (4) umschließt.

5. Vorrichtung nach einem der Ansprüche 1 bis 4, **dadurch gekennzeichnet,** **dass** zum Verstellen der Vorspannung der Federn (5) Kragen (6) vorgesehen sind, die zwischen dem rahmenseitigen Ende der jeweiligen Feder (5) und dem jeweiligen Rahmen (1) bewegbar auf dem Stab (4) angeordnet sind.

6. Vorrichtung nach Anspruch 5, **dadurch gekennzeichnet,** **dass** der Stab (4) zumindest teilweise ein Außengewinde (11) und die Kragen (6) ein Innengewinde aufweisen.

7. Vorrichtung nach einem der vorhergehenden Ansprüche, **dadurch gekennzeichnet,** **dass** zumindest ein zusätzliches Masseelement (7) abnehmbar am auf dem Stab (4) verschiebbaren Masseelement (3) befestigbar ist.

8. Vorrichtung zur Kompensation seitlicher Rahmenschwingungen in Druckwerken von Rotationsdruckmaschinen, mit einem Masseelement (9), welches durch federelastische Mittel mit dem Gehäuse (1) des Druckwerks verbunden ist, **dadurch gekennzeichnet,** **dass** die federelastischen Mittel durch einen mit seinem einen Ende fest mit dem Gehäuse des Druckwerks verbundenen elastischen Stab (8) gebildet werden, der sich in einer im Wesentlichen senkrecht zu einer Schwingungsrichtung der seitlichen Rahmenschwingungen des schwingenden Druckwerks verlaufenden Richtung erstreckt und an dem das Masseelement (9) befestigt ist, und **dadurch,** **dass** die Position des Masseelements (9) bezüglich des Stabes (8) veränderbar ist.

9. Vorrichtung nach Anspruch 8, **dadurch gekennzeichnet,** **dass** der Stab (8) ein Außengewinde (11) und das Masseelement (9) ein Innengewinde aufweist.

10. Vorrichtung nach Anspruch 8 order 9, **dadurch gekennzeichnet,** **dass** der Stab (8) an einem sich zwischen den Seitenwänden (1) des Druckwerks erstreckenden Verbindungsstück (2) angeordnet ist.

11. Vorrichtung nach Anspruch 9, **dadurch gekennzeichnet,** **dass** die Position des Stabs (8) in Bezug auf das Verbindungsstück (2) in Richtung der Seitenwände (1) des Druckwerks veränderbar ist.

**Claims**

1. Device for compensating for lateral frame vibrations in printing units of rotary presses, having a weight element (3) which is connected by means of resilient means to the housing of the printing unit, the weight element (3) being disposed displaceably on a rod (4) which is disposed between the side frames (1), *characterised in that* the resilient means are formed by two springs (5) which act on the weight element (3) and **in that** the pre-tension of the springs (5) is adjustable.

2. Device according to claim 1, *characterised in that* the springs (5) are disposed on the rod (4).

3. Device according to one of the preceding claims, *characterised in that* the springs (5) have substantially the same spring constant ($K_1$, $K_2$) .

4. Device according to one of the preceding claims, *characterised by* a hollow connection piece (2) which is disposed between the side frames (1) and encloses the rod (4).

5. Device according to one of the claims 1 to 4, *characterised in that,* in order to adjust the pre-tension of the springs (5), collars (6) are provided which are disposed, moveably on the bar (4), between the frame-side end of the respective spring (5) and the respective frame (1).

6. Device according to claim 5, *characterised in that* the rod (4) has at least partially an outer thread (11) and the collars (6) have an inner thread.

7. Device according to one of the preceding claims, *characterised in that* at least one additional weight element (7) can be mounted removeably on the weight element (3) which is displaceable on the rod (4).

8. Device for compensating for lateral frame vibrations in printing units of rotary presses, having a weight element (9) which is connected by means of resilient means to the housing (1) of the printing unit, *characterised in that* the resilient means are formed by an elastic rod (8) which is connected securely to the housing of the printing unit by its one end and extends in a direction which extends substantially perpendicular to a vibration direction of the lateral frame vibrations of the vibrating printing unit, the weight element (9) being mounted on said rod and **in that** the position of the weight element (9) can be changed relative to the rod (8).

9. Device according to claim 8, *characterised in that* the rod (8) has an outer thread (11) and the weight element (9) has an inner thread.

10. Device according to claim 8 or 9, *characterised in that* the rod (8) is disposed on a connection piece (2) which extends between the side walls (1) of the printing unit,

11. Device according to claim 9, *characterised in that* the position of the rod (8) relative to the connection piece (2) can be changed in the direction of the side walls (1) of the printing unit.

## Revendications

1. Dispositif de compensation de vibrations de bâtis latéraux dans des groupes imprimants de presses rotatives, doté d'une masse (3) reliée au boîtier du groupe imprimant par des moyens élastiques, la masse (3) étant disposée de manière mobile sur une barre (4) disposée entre les bâtis latéraux (1) **caractérisé en ce que**, les moyens élastiques sont formés par deux ressorts (5) agissant sur la masse (3), et **en ce que** la précontrainte des ressorts (5) est réglable.

2. Dispositif selon la revendication 1, **caractérisé en ce que**, les ressorts (5) sont agencés sur la barre (4).

3. Dispositif selon l'une quelconque des revendications précédentes, **caractérisé en ce que**, les ressorts (5) présentent essentiellement le même coefficient d'élasticité ($K_1$, $K_2$).

4. Dispositif selon l'une quelconque des revendications précédentes, **caractérisé par** un élément de liaison (2) creux, qui est disposé entre les bâtis latéraux (1) et entoure la barre (4).

5. Dispositif selon l'une quelconque des revendications 1 à 4, **caractérisé en ce que**, des collerettes (6), qui sont disposées sur la barre (4) de manière à pouvoir être déplacées entre l'extrémité côté bâti du ressort respectif (5) et le bâti respectif (1), sont prévues pour ajuster la précontrainte des ressorts (5).

6. Dispositif selon la revendication 5,

**caractérisé en ce que**,
la barre (4) présente au moins partiellement un filet extérieur (11) et les collerettes (6) un filet intérieur.

7. Dispositif selon l'une quelconque des revendications précédentes,
**caractérisé en ce que**,
au moins une masse (7) supplémentaire peut être fixée de manière amovible au niveau de la masse (3) déplaçable sur la barre (4).

8. Dispositif de compensation de vibrations de bâtis latéraux dans des groupes imprimants de presses rotatives, doté d'une masse (9) qui est reliée au boîtier (1) du groupe imprimant par des moyens élastiques,
**caractérisé en ce que**,
les moyens élastiques sont formés par une barre (8) élastique reliée solidement avec une de ses extrémités au boîtier du groupe imprimant, laquelle barre s'étend dans un sens s'étendant essentiellement de manière perpendiculaire à un sens de vibration des vibrations de bâtis latéraux du groupe imprimant oscillant et à laquelle est fixée la masse (9), et
**en ce que** la position de la masse (9) peut être modifiée par rapport à la barre (8).

9. Dispositif selon la revendication 8,
**caractérisé en ce que**,
la barre (8) présente un filet extérieur (11) et la masse (9) un filet intérieur.

10. Dispositif selon la revendication 8 ou 9,
**caractérisé en ce que**,
la barre (8) est disposée sur un élément de raccord (2) s'étendant entre les parois latérales (1) du groupe imprimant.

11. Dispositif selon la revendication 9,
**caractérisé en ce que**
la position de la barre (8) par rapport à l'élément de raccord (2) peut être modifiée dans le sens des parois latérales (1) du groupe imprimant.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 8276562 A
- DE 3011384
- US 3633495 A